Europäisches Patentamt

European Patent Office

Office européen des brevets

(19)

(11) Numéro de publication: **0 342 160**
**A1**

# (12) DEMANDE DE BREVET EUROPEEN

(21) Numéro de dépôt: **89810340.3**

(22) Date de dépôt: **08.05.89**

(51) Int. Cl.⁴: **D 05 B 19/00**

(30) Priorité: **09.05.88 CH 1756/88**

(43) Date de publication de la demande:
**15.11.89 Bulletin 89/46**

(84) Etats contractants désignés:
**CH DE ES FR GB IT LI SE**

(71) Demandeur: **MEFINA S.A.**
**5a Boulevard de Pérolles**
**CH-1700 Fribourg (CH)**

(72) Inventeur: **Jimenez, Antonio**
**19, rue de la Prulay**
**CH-1217 Meyrin (CH)**

**Deschenaux, Pierre-Alain**
**Villa "La Ferme"**
**CH-1267 Coinsins (CH)**

(74) Mandataire: **Dousse, Blasco et al**
**7, route de Drize**
**CH-1227 Carouge/Genève (CH)**

(54) Dispositif d'information pour machine à coudre électronique.

(57) Ce dispositif d'information comporte un substrat (2) portant deux files (7, 8) d'idéogrammes représentatifs d'une partie des motifs de couture exécutables par la machine à coudre, et un volet (9) articulé entre ces files et portant, sur chaque face, une file d'idéogrammes concernant une autre partie de ces motifs de couture. Ce volet est susceptible d'être basculé dans deux positions limites, de recouvrement de l'une ou l'autre file d'idéogrammes du substrat. Il présente, pour chaque idéogramme, une fenêtre (15) laissant entrevoir l'une des diodes (17) associée à chaque idéogramme du substrat. Des touches A et B permettent de procéder à la sélection de chaque motif de couture désiré, dont l'identité est marquée par allumage de la diode associée à l'idéogramme correspondant ou visible au travers de la fenêtre du volet adjacente à cet idéogramme.

FIG. 1

FIG. 2

EP 0 342 160 A1

## Description

### DISPOSITIF D'INFORMATION POUR MACHINE A COUDRE ELECTRONIQUE

La présente invention a pour objet un dispositif d'information pour machine à coudre électronique, notamment pour une machine permettant l'exécution d'une pluralité de motifs de couture différents à partir d'instructions stockées dans une mémoire, du genre décrit notamment dans les brevets US-4,323,023 et 4,335,667, c'est-à-dire comportant, d'une part, un substrat portant au moins un premier ensemble d'indications caractéristiques d'au moins une série parmi les motifs de couture de ladite pluralité de motifs de couture et, d'autre part, un volet basculant, associé au substrat et susceptible d'être rabattu sur celui-ci dans deux positions angulaires limites, ce volet venant à masquer une portion du substrat différente dans chacune desdites positions limites, les deux faces du volet portant au moins un second ensemble d'indications remplaçant alternativement, pour l'usager, celles portées par la portion du substrat masquée par le volet, dans l'une ou l'autre desdites positions limites, une pluralité d'organes de signalisation optique, susceptibles d'être portés alternativement dans un état actif et dans un état passif de fonctionnement, chaque organe étant associé à une indication propre, caractéristique d'un motif de couture déterminé.

Le dispositif selon la présente invention se caractérise par le fait que ledit premier ensemble d'indications portées par le substrat est formé par au moins deux files d'idéogrammes caractéristiques chacun d'un motif de couture de ladite série de motifs de couture, que le volet est articulé entre ces files, que ledit second ensemble d'indications est constitué par au moins deux autres files d'idéogrammes représentatifs d'autres motifs de couture exécutables par la machine à coudre, l'une de ces files étant portée par la première face du volet et l'autre par la seconde face de celui-ci, que les idéogrammes de chaque face du volet sont placés de façon que, dans l'une et l'autre desdites positions limites, ces idéogrammes sont situés substantiellement au droit des idéogrammes portés par la portion du substrat recouverte par le volet, que le volet présente une fenêtre associé à chaque idéogramme, que les organes de signalisation optique sont en nombre correspondant à celui des idéogrammes portés par le substrat et qu'ils sont disposés sur celui-ci de façon à demeurer visibles, au travers des fenêtres du volet, en position rabattue de celui-ci, de manière à permettre, dans l'un de leurs états de fonctionnement, de mettre en relief tant les idéogrammes visibles sur le substrat que ceux du volet dont les fenêtres laissent entrevoir des organes de signalisation portés dans ledit état de fonctionnement.

L'invention a également pour objet une machine à coudre électronique englobant un tel dispositif.

De préférence, mais non exclusivement, le substrat portant le premier ensemble d'idéogrammes sera constitué par au moins une portion du boîtier de la machine.

Le dessin annexé représente, à titre d'exemple, une forme d'exécution de l'objet de la présente invention:

La figure 1 est une vue en élévation d'une machine à coudre munie d'un dispositif selon l'invention;

La figure 2 est une vue de détail de la figure 1, à plus grande échelle;

La figure 3 est une vue similaire à celle de la figure 2, dans une autre position de certains éléments;

Les figures 4 et 5 sont des vues en coupe de la figure 2 selon II$_a$-II$_a$, respectivement II$_b$-II$_b$.

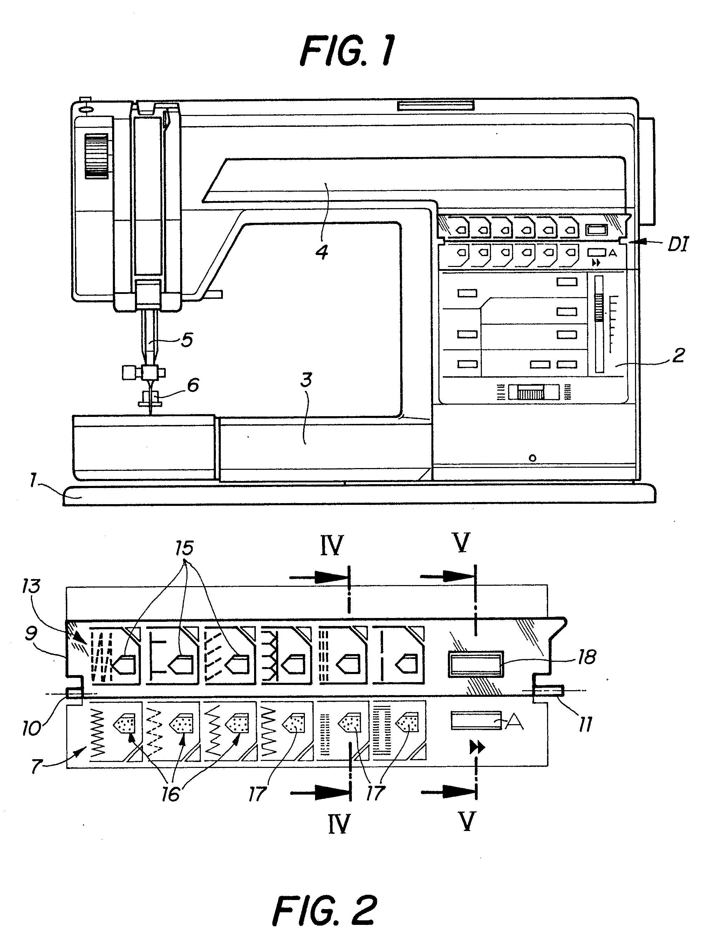

La machine à coudre représentée sur la figure 1, du type dit "à bras libre", comporte une embase 1 sur la partie droite de laquelle se dresse un montant vertical 2 portant deux bras horizontaux, 3 et 4, respectivement, dont le premier, inférieur, englobe notamment un dispositif d'entraînement du tissu, un dispositif capteur de boucle et un mécanisme d'entraînement et de commande de ceux-ci, tous organes non représentés, et dont le second, supérieur, porte une barre à aiguille 5, un mécanisme de commande de cette barre, non représenté, et un pied presseur 6 notamment.

Cette machine à coudre est une machine électronique du type à microprocesseur, c'est-à-dire une machine dans laquelle les instructions nécessaires à la commande de l'aiguille, du dispositif d'entraînement du tissu à coudre et du dispositif capteur de boucle, par exemple en vue de l'obtention de motifs de couture divers, sont stockées sous forme digitale dans une ou plusieurs mémoires électroniques, ROM, PROM, RAM etc et sont lues par un microprocesseur dont dépend le contrôle de l'ensemble des fonctions de la machine.

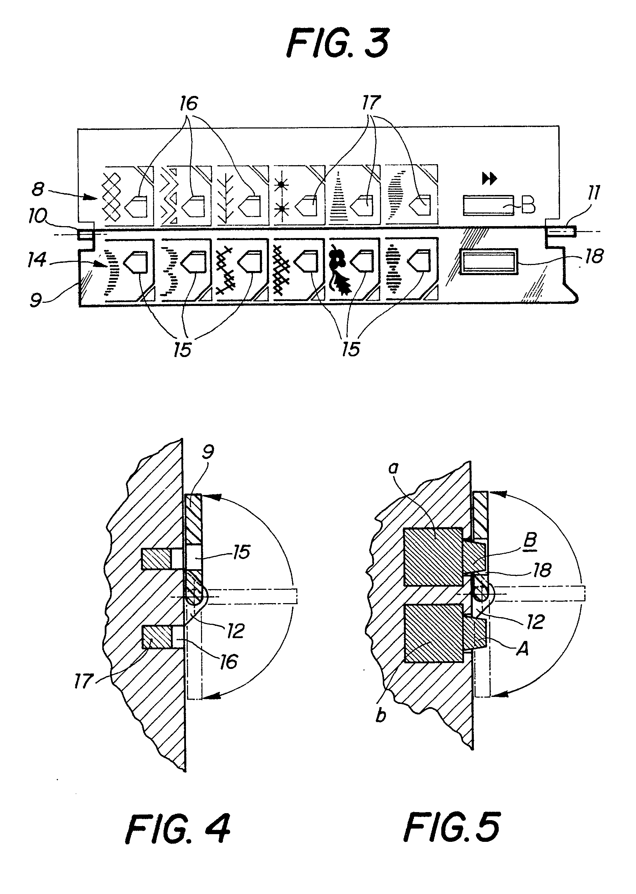

Ces instructions peuvent, notamment, concerner l'exécution de motifs de couture de types différents que l'usager peut présélectionner individuellement en vue de leur exécution subséquente par actionnement de diverses touches que comporte la machine représentée, dont celles indiquées par les références A et B (Fig 2 et 3) sont plus directement concernées par le dispositif d'information selon l'invention, indiqué au dessin par la référence DI (fig 1) et qui va maintenant être décrit.

Ce dispositif comporte, disposées sur la partie supérieure du montant 2 de la machine, deux files, 7 et 8 (fig 2 et 3), parallèles et adjacentes, de six idéogrammes chacune représentant autant de types de motifs de couture différents susceptibles d'être exécutés par la machine à coudre. Entre ces files est monté un volet 9 aux deux extrémités duquel font saillie des axes 10 et 11 pivotés chacun dans une oreille propre 12, se dressant sur la face avant du montant 2 (fig 4 et 5): ce volet peut donc être conduit, par basculement, dans deux positions limites dans lesquelles il recouvre soit les idéogrammes de la file 8 (fig 2), soit ceux de la file 7 (fig 3).

Comme on le voit au dessin, chaque face du volet 9 porte une file de six idéogrammes 13, respectivement 14, correspondant à douze autres types de motifs de couture différents. A droite de chaque idéogramme, le volet 9 présente une fenêtre 15 de forme polygonale. Les idéogrammes du volet sont disposés de façon telle que, dans l'une ou l'autre des deux positions rabattues de celui-ci (fig 2 et 3), chaque idéogramme vient se trouver juste au-dessus de l'un des idéogrammes de la file 7 ou 8 qui est recouverte par le volet.

Il convient, à ce point, de relever que, à droite de chaque idéogramme des files 7 et 8, la paroi du montant 2 est creusée par un logement 16 dans lequel est disposée une diode 17 dont la fonction sera illustrée ci-après. Par ailleurs, l'emplacement des logements 16 sur le montant 2 est tel que les diodes 17, associées à l'une et à l'autre file d'idéogrammes 7 et 8, demeurent visibles au travers des fenêtres 15 du volet 9, dans l'une comme dans l'autre position basculée limite de celui-ci.

On signalera encore que ce volet comporte une fenêtre supplémentaire 18, de dimension légèrement supérieure à la section des touches de commande A et B que présentent des interrupteurs a et b noyés dans des logements du montant 2 de la machine. La position relative des touches A et B et de la fenêtre 18 du volet 9 est telle que ce volet coiffe l'une ou l'autre de ces touches selon la position limite qu'il occupe.

En outre, et ainsi que cela se voit distinctement sur la fig. 5, l'épaisseur du volet 9 et/ou la hauteur de la partie saillante des touches A et B sont telles que, dans l'une ou l'autre des positions basculées limites du volet, la touche A ou B se trouvant momentanément dans la fenêtre 18 du volet reste escamotée, c'est-à-dire légèrement en retrait par rapport à la surface du volet (voir fig 5) de sorte qu'il est impossible à l'usager de l'actionner.

Dans une variante, non représentée, il serait évidemment possible de faire usage d'un volet de plus grande épaisseur, dans lequel la fenêtre 18 serait remplacée par un logement prévu sur chaque face du volet, l'un au droit de l'autre, et à l'intérieur duquel pourrait prendre place la touche A, pour l'un, et la touche B, pour l'autre, selon la position limite de basculement occupée par le volet 9.

Le dispositif d'information qui vient d'être décrit est, en effet, destiné à une machine à coudre électronique dans laquelle la sélection des motifs de couture s'effectue, par exemple, selon les principes exposés dans le brevet US-4,005,664 ou de la manière mise en oeuvre plus récemment dans la machine ELNA® 5000.

Dans l'une comme dans l'autre de ces techniques, la sélection d'un motif de couture donné s'effectue, en effet, par simple actionnement répétitif d'une touche unique commandant, lors de chaque actionnement, le déplacement d'un poin teur parcourant la mémoire électronique dans laquelle sont stockées les informations relatives à l'exécution des divers motifs de couture à exécuter, de l'entrée de l'ensemble d'informations concernant un motif de couture donné à l'entrée de l'ensemble correspondant relatif au motif de couture suivant. Lorsque le pointeur a été conduit à l'entrée de la portion de mémoire concernant le dernier motif stocké, un actionnement subséquent de la touche de commande ramène ce pointeur à l'entrée de la portion de mémoire relative au premier motif stocké dans la mémoire et ainsi de suite: le système qui vient d'être décrit travaille donc en boucle fermée.

On signalera encore que, chaque fois que le pointeur est conduit à l'entrée de la section de mémoire d'un motif de couture donné, le système provoque l'allumage de la diode associée à l'idéogramme correspondant.

Dans le cas de la machine illustrée dans la figure 1, l'actionnement répété de la touche A détermine la sélection successivement de tous les motifs de couture dont les idéogrammes sont visibles sur la fig 2, à commencer par celui occupant la position extrême droite sur la file 13 et en allant dans le sens contraire à celui des aiguilles d'une montre.

La touche B permet d'obtenir la sélection des motifs de couture dont les idéogrammes apparaissent sur la fig 3, à partir de l'idéogramme situé à l'extrémité droite de la file 8 d'idéogrammes, en parcourant les files 8 et 9 dans le sens anti-horaire.

L'invention n'est pas limitée à ce qui a été représenté: en particulier, il est évident que le dispositif d'information décrit pourrait ne pas être associé au boîtier même d'une machine à coudre mais faire partie, par exemple, d'un coffret de commande indépendant de la machine, tel qu'on en trouve souvent avec les machines à coudre de type industriel, par exemple.

**Revendications**

1. Dispositif d'information pour machine à coudre électronique, notamment pour une machine permettant l'exécution d'une pluralité de motifs de couture différents à partir d'instructions stockées dans une mémoire électronique, comportant, d'une part, un substrat portant au moins un premier ensemble d'indications caractéristiques d'au moins une série parmi les motifs de couture de ladite pluralité de motifs de couture et, d'autre part, un volet basculant, associé au substrat et susceptible d'être rabattu sur celui-ci dans deux positions angulaires limites, ce volet venant à masquer une portion du substrat différente dans chacune desdites positions limites, les deux faces du volet portant au moins un second ensemble d'indications remplaçant alternativement, pour l'usager, celles portées par la portion du substrat masquée par le volet dans l'une ou l'autre desdites positions limites, une pluralité d'organes de signalisation optique, susceptibles d'être portés alternativement dans un état actif et dans un état passif de fonctionnement, chaque organe étant associé à une indication propre, caractéristique d'un motif de couture déterminé, caractérisé par le fait que ledit premier ensemble d'indications portées par le substrat est formé par au moins deux files d'idéogrammes caractéristiques chacun d'un motif de couture de ladite série de motifs de couture, que le volet est articulé entre ces files, que ledit second ensemble d'indications est constitué par au moins deux autres files d'idéogrammes représentatifs d'autres motifs de couture exécutables par la machine à coudre, l'une de ces files étant portée par la première face du volet et l'autre par la seconde face de celui-ci, que les idéogrammes de chaque face du volet sont placés de façon que, dans l'une et l'autre desdites positions limites, ces idéogrammes sont situés substantiellement au droit des idéogrammes portés par la portion du substrat recouverte par le volet, que le volet présente une fenêtre associée à chaque idéogramme, que les organes de signalisation optique sont en nombre correspondant à celui des idéogrammes portés par le substrat et qu'il sont disposés sur celui-ci de façon à demeurer visibles, au travers des fenêtres du volet, en position rabattue de celui-ci, de manière à permettre, dans l'un de leurs états de fonctionnement, de mettre en relief tant les idéogrammes visibles sur ce substrat que ceux du volet dont les fenêtres laissent entrevoir des organes de signalisation portés dans ledit état de fonctionnement.

2. Machine à coudre électronique englobant un dispositif selon la revendication 1, caractérisée par le fait que le substrat portant le premier ensemble d'idéogrammes est constitué par au moins une portion du boîtier de la machine.

# FIG. 1

# FIG. 2

# FIG. 3

16      17

8

10

14

9

15       15

11

18

# FIG. 4

9

15

12

16

17

# FIG. 5

a

B

18

12

A

b

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 365 566 (SINGER) <br> * Figure 2; colonne 3, ligne 62; colonne 4, paragraphe 1 * <br> --- | | D 05 B 19/00 |
| D,A | US-A-4 323 023 (SINGER) <br> * En entier * <br> --- | | |
| A | GB-A-2 077 462 (BROTHER) <br> * Colonne 1, lignes 28-44 * <br> --- | | |
| A | IBM TECHNICAL DISCLOSURE BULLETIN, vol. 15, no. 1, juin 1972, page 31, New York, US; R.G. CROSS: "Keyboard overlay" <br> --- | | |
| D,A | US-A-4 335 667 (SINGER) <br> --- | | |
| A | DE-A-3 304 041 (JANOME) <br> ----- | | |

DOMAINES TECHNIQUES RECHERCHES (Int. Cl.4)

D 05 B
G 06 F
G 05 B

Le présent rapport a été établi pour toutes les revendications

| Lieu de la recherche | Date d'achèvement de la recherche | Examinateur |
|---|---|---|
| LA HAYE | 18-07-1989 | VUILLEMIN L.F. |